# EUROPÄISCHE PATENTANMELDUNG

(11) **EP 4 733 621 A1**
(43) Veröffentlichungstag der Anmeldung: **29.04.2026**
(21) Anmeldenummer: 25210959.0
(22) Anmeldetag: 24.10.2025
(51) Int. Cl.: F16F 9/04

(54) **VERFAHREN ZUM VULKANISIEREN EINES BALGS EINER LUFTFEDER**

(30) Priorität: 24.10.2024 DE 102024210249
(71) Anmelder: ContiTech Deutschland GmbH, 30175 Hannover (DE)
(72) Erfinder: Balachonzew, Boris, 30175 Hannover (DE); Stahmer, Reinhard, 30175 Hannover (DE)
(74) Vertreter: Preusser, Andrea

(57) **Zusammenfassung**

Die vorliegende Erfindung betrifft ein Verfahren zum Vulkanisieren eines Balgs (10) einer Luftfeder (1), wobei der Balg (10) aufweist:
• einen Rollbereich (10b) und
• wenigstens einen ersten Wulstbereich (10a), mit welchem der Balg (10) an einem Ende des Rollbereichs (10b) endet,
wobei der erste Wulstbereich (10a) zumindest abschnittsweise, vorzugsweise vollständig, einen ringförmigen Metallkern (10c) aufweist. Das Verfahren ist dadurch gekennzeichnet, dass zusätzlich zur Vulkanisation des Balgs (10) eine induktive Erhitzung des ringförmigen Metallkerns (10c) des ersten Wulstbereichs (10a) erfolgt.

## Beschreibung

Die vorliegende Erfindung betrifft ein Verfahren zum Vulkanisieren eines Balgs einer Luftfeder, eine entsprechende Vorrichtung sowie eine entsprechend vulkanisierte Luftfeder und ein Fahrzeug oder eine Anlage mit einer derartigen Luftfeder.

Zur Federung von Schwingungen können je nach Anwendung verschiedene Arten von Federungssystemen eingesetzt werden. Hierzu gehören auch die Luftfederungen, welche die Kompressibilität von Gasen und insbesondere von Luft ausnutzen.

Weit verbreitete Bauarten einer Luftfederung sind Luftfedern mit konstantem Volumen in Regellage. In diesem Fall wird die Luft im Balg eingeschlossen, welcher mit weiteren Beschlagteilen, wie mit einem Deckel oder einer Bördelplatte sowie einem Abrollkolben bei Straßenfahrzeugen oder einer Felge bei Schienenfahrzeugen luftdicht verbunden ist. Dabei ist der Kolben bzw. die Felge sowohl mit dem unteren Ende des Rollbalgs (bei Straßenfahrzeugen) bzw. des Balges (Bei Schienenfahrzeugen) verbunden, als auch mit einer Achse bei Straßenfahrzeugen und einem Drehgestell bei Schienenfahrzeugen. Das obere Ende des Rollbalgs ist mit einem Deckel oder einer Bördelplatte verbunden, welche mit der Karosserie bzw. dem Chassis oder dem Rahmen des Fahrzeugs verbunden ist. Bei Schienenfahrzeugen wird der Balg zwischen einer Platte oben und der Felge unten angeordnet. Rollbalg-Luftfedern sowie Faltenbälge kommen bei Fahrzeugen sowie stationären Lagerungen zur Anwendung.

Der Rollbalg ist über den Kolben gestülpt und rollt unter Druck auf diesem ab. Die Luftfeder kann durch einen Kompressor mit Druckluft versorgt werden, so dass in Abhängigkeit von der Beladung Luft zu- oder abgepumpt werden kann, um das Füllvolumen und somit die Niveaulage des Fahrzeugs konstant zu halten oder anzupassen. Derartige Luftfedern werden bei verschiedenen Arten von Fahrzeugen wie insbesondere bei Straßenfahrzeugen wie insbesondere Lastkraftwagen, Anhänger und Omnibussen sowie Schienenfahrzeugen eingesetzt.

Die Hauptanwendungsgebiete von Luftfedern und den zugehörigen Luftfedersystemen sind Kraftfahrzeuge wie beispielsweise Pkw, Lkw, Omnibusse und dergleichen, Eisenbahnen sowie industrielle Anwendungen wie beispielsweise als Zylinder in Vorrichtungen, Maschinenlagerungen und dergleichen. Bei Nutzfahrzeugen kommen neben der Achsluftfederung noch die Lkw-Kabinenfederung sowie die Sitz-Luftfederung von Lkw und Omnibussen hinzu. Hinzu kommen noch Kompensatoren (Rohrverbinder).

Zu einem Luftfedersystem bzw. zu einer Luftfeder gehört wenigstens ein Luftfederbalg, auch kurz Balg genannt, wie zuvor bereits erwähnt, welcher aus gummierten Gewebelagen, Gummikappen (ein oder mehrere Innen- und Außenlagen) sowie Kernen (meist metallisch) hergestellt bzw. konfektioniert wird. Schlauchrollbalg-Rohlinge können auch kontinuierlich durch Extrusion und gespulte Gewebe gefertigt werden.

Bauformen von Luftfedern sind Rollbälge und Schlauchrollbälge sowie deren Systeme und Ein- und Mehrfaltenbälge für Achs-, Kabinen- und Sitz-Luftfederungen bei Pkw- und Nfz-Anwendungen, Luftfedersysteme für Schienenfahrzeuge, Maschinenlagerungen.

Die üblichen Elastomermischungen in Luftfederbälgen sind NR (Naturkautschuk bzw. Englisch: Natural Rubber), BR (Polybutadien-Kautschuk), CR (Chlorbutadien-Kautschuk), EPDM (Ethylen-Propylen-Dien-Kautschuk) sowie zugehörige Verschnittmischungen, sowie alle anderen hoch dynamisch belastbaren Polymermischungen.

In jedem Fall ist Stand der Technik bei der Herstellung, dass die Vulkanisation in Heizformen durch Dampf, in elektrisch beheizten Formen oder in induktiv vorgeheizten Formen mit und ohne Heizschlauch bzw. Heizbalg erfolgt. Dabei wird der Rohling des Balgs jeweils einseitig an die Innen- oder Außenseite der Form bzw. des Heizdorns unter Druck und Temperatur gepresst und so vulkanisiert.

Nachteilig hierbei ist, dass in den Bereichen um die Kerne (Umbuck) ein wesentlich dickeres Materialpaket als im normalen, dünnwandigen Balgbereich vorhanden ist, was als Wulst bzw. als Wulstbereich bezeichnet werden kann. Deshalb ist, um denselben Vulkanisationsgrad zu erreichen, in den Kernbereichen eine längere Vulkanisationszeit erforderlich. Dies führt zu einem erhöhten Energieeinsatz und damit auch zu erhöhten Energiekosten, insbesondere für die teure Dampferzeugung. Auch ist Gummi ein schlechter Wärmeleiter.

Nachteilig ist ferner, dass für die normalen, dünnwandigen Balgbereiche sich eine zu lange Vulkanisationszeit ergibt, falls der Kernbereich bzw. der Wulstbereich vollständig durchgeheizt und vulkanisiert werden soll, was im dann zu lange vulkanisierten dünnwandigen Balgbereich zu einer Reversion führt, d.h. die Vernetzung wird durch Aufbruch der Molekülketten wieder abgebaut. Davon betroffen ist auch der sog. Rollbereich des Balges, der später im Betrieb stark dynamisch beansprucht ist.

Die EP 2 065 151 A1 betrifft eine Heizeinheit, die in der Lage ist, die Gesamtimpedanz auf einfache und kostengünstige Weise an die Größe der Reifenform anzupassen, so dass eine Energiequelle mit einem hohen Leistungsfaktor verwendet werden kann, sowie eine Reifenheizvorrichtung, die diese verwendet. Ein ferromagnetisches Metallteil erwärmt eine Reifenform durch Wärmeleitung. Eine Induktionsheizspule ist auf der der Reifenform gegenüberliegenden Seite des ferromagnetischen Metallelements angeordnet, um das ferromagnetische Metallelement durch Erzeugung von Magnetfeldlinien zu erwärmen. Ein nichtmagnetischer Leiter ist auf der dem ferromagnetischen Metallteil gegenüberliegenden Seite der Induktionsheizspule angeordnet, um die von der Induktionsheizspule erzeugten Magnetfeldlinien abzuschirmen. Eine Heizeinheit, die diese Elemente enthält, erwärmt die Reifenform, in der ein Reifen gelagert wird. Eine relative Positionsbeziehung zwischen dem nichtmagnetischen Leiter, der Induktionsheizspule und dem ferromagnetischen Metallteil wird durch Abstandshalter festgelegt.

Die EP 3 368 264 A1 beschreibt ein Verfahren zur Vulkanisation von Körpern aus elastomerem Werkstoff, bei dem der zu vulkanisierende Rohling in einer den Rohling aufnehmenden metallischen Vulkanisationsform auf Vulkanisationstemperatur erwärmt wird und die Erwärmung des Rohlings durch Wärmeübertragung aus einer elektrisch induktiv erwärmten Vulkanisationsform erfolgt, wobei die Erwärmung der Vulkanisationsform über mindestens zwei elektrisch gekoppelte und koaxial an den Enden der Vulkanisationsform angeordnete und von einem hochfrequenten Wechselstrom durchflossene Kopplungsspulen erfolgt.

Eine Aufgabe der vorliegenden Erfindung ist es, die Herstellung von Luftfedern bzw. deren Bälgen zu verbessern. Insbesondere soll dies energieeffizienter und bzw. oder prozessoptimierter als bisher bekannt erfolgen können. Insbesondere soll eine gleichmäßige und vollständige Vulkanisation des Balgs der Luftfeder sowohl im Balgbereich bzw. im Rollbereich als auch im Kernbereich bzw. im Randbereich erreicht werden, ohne eine übermäßige Vulkanisation in einem Bereich des Balgs zu verursachen. Dies soll insbesondere möglichst einfach und bzw. oder kostengünstig erfolgen können. Zumindest soll eine Alternative zu den bekannten Möglichkeiten geschaffen werden.

Die Aufgabe wird erfindungsgemäß durch ein Verfahren, durch eine Vorrichtung, durch eine Luftfeder und durch ein Fahrzeug mit den Merkmalen gemäß der unabhängigen Ansprüche gelöst. Vorteilhafte Weiterbildungen sind in den Unteransprüchen beschrieben.

Somit betrifft die vorliegende Erfindung ein Verfahren zum Vulkanisieren eines Balgs einer Luftfeder, wobei der Balg aufweist:
- einen Rollbereich und
- wenigstens einen ersten Wulstbereich, mit welchem der Balg an einem Ende des Rollbereichs endet,
wobei der erste Wulstbereich zumindest abschnittsweise, vorzugsweise vollständig, einen ringförmigen Metallkern aufweist.

Der ringförmige Metallkern kann der Stabilität des ersten Wulstbereichs dienen und radial zur ringförmigen bzw. länglichen Erstreckungsrichtung des Metallkerns vollständig von dem zu vulkanisierenden Material umgeben sein. Insbesondere kann der ringförmige Metallkern ohnehin vorhanden sein, um diese stabilisierende Wirkung zu erreichen. Der ringförmige Metallkern kann jedoch auch zusätzlich, d.h. zur Umsetzung der vorliegenden Erfindung, im wenigstens ersten Wulstbereich ergänzt werden.

In jedem Fall ist das erfindungsgemäße Verfahren dadurch gekennzeichnet, dass zusätzlich zur Vulkanisation des Balgs eine induktive Erhitzung des ringförmigen Metallkerns des wenigstens ersten Wulstbereichs erfolgt.

Hierzu können entsprechende Spulen relativ zum wenigstens ersten Wulstbereich angeordnet werden, um mittels eines an den Spulen angelegten elektromagnetischen Felds eine induktive Kopplung mit dem ringförmigen Metallkern des ersten Wulstbereichs des Balgs zu bewirken, welche zu einer ausreichend Erhitzung des ringförmigen Metallkerns führt, um das den ringförmigen Metallkern unmittelbar umgebende zu vulkanisierende Material des ersten Wulstbereichs und insbesondere den gesamten ersten Wulstbereich vergleichbar stark wie bei der übrigen Vulkanisation des Balgs zu erhitzen.

Der vorliegenden Erfindung liegt dabei die Erkenntnis zugrunde, dass derartige Wulstbereiche der Luftfederbälge von der Hitze des Vulkanisationsverfahrens nicht sicher vollständig erreicht und somit auch nicht sicher vollständig vulkanisiert werden können. Entsprechend kann ein nicht-vollständig vulkanisierter Wulst eines Balgs einer Luftfeder einen Qualitätsmangel und insbesondere eine konstruktive Schwachstelle darstellen, wo am ehesten eine Beschädigung des Balgs im Betrieb zu erwarten ist, welcher zu einem Ausfall der Luftfeder führen kann.

Erfindungsgemäß erfolgt daher zusätzlich zur üblichen Vulkanisation eine induktive Erhitzung des ringförmigen Metallkerns des ersten Wulstbereichs des Balgs, so dass das zu vulkanisierende Material nicht nur, wie bisher bekannt, von außen von der Hitze des Vulkanisationsprozesses erhitzt und hierdurch unter Druck vulkanisiert werden kann, sondern erfindungsgemäß zusätzlich auch von innen durch die induktiv erzeugte Erhitzung des ringförmigen Metallkerns des ersten Wulstbereich des Balgs. Dies kann das Ergebnis der Vulkanisation verbessern, insbesondere zu einem vollständig durchvulkanisierten ersten Wulstbereich des Balgs führen. Auch kann dies den Vulkanisationsvorgang beschleunigen und bzw. oder dessen Energieverbrauch reduzieren, da nicht mehr so viel thermische Energie von außen in den ersten Wulstbereich des Balgs eingebracht werden muss, um dessen Inneres zu erreichen und zu vulkanisieren.

Mit anderen Worten kann durch die induktive Erhitzung des ringförmigen Metallkerns des ersten Wulstbereichs des Balgs dank einer guten Durchdringung des magnetischen Feldes durch das zu vulkanisierende Material, vorzugsweise Gummi, der metallische Kern wirkungsvoll aufgeheizt werden. Der metallische Kern dient dabei als Heizelement im Wulstbereich. Die Wärme wird unmittelbar in den Wulstbereich abgegeben, so dass ein schnelles und energieeffizientes Vulkanisieren dieses dicken Material- bzw. Gummibereichs erreicht werden kann.

Vorteilhaft ist auch, dass ein Nachvulkanisieren nach Herausnahme aus der Vorrichtung bzw. aus der Heizform durch den erhitzten ringförmigen Metallkern verbessert werden kann. Die Vulkanisation wird also vor, während und nach dem eigentlichen Vulkanisationsprozess verbessert werden.

Zu beachten ist dabei, dass zu vulkanisierende Materialien wie insbesondere elastomere Materialien bzw. Gummi üblicherweise schlechte Wärmeleiter sind. Deshalb ist es ineffizient zu versuchen, dass zu vulkanisierende Material selbst zu erhitzen. Daher wird erfindungsgemäß mit magnetischem Wechselfeld gezielt der metallische Kern des ersten Wulstbereichs erhitzt. Dadurch wird die Hitze bzw. Wärme direkt in die größte Materialanhäufung des Balgs, nämlich in den ersten Wulstbereich, transportiert. Dadurch wird das zu vulkanisierende Material schnell auf die gewünschte Temperatur erhitzt.

Dies kann ggfs. auch für einen zweiten, gegenüberliegenden Wulstbereich mit ringförmigen Metallkern, vorzugsweise gleichzeitig mit dem induktiven Erhitzen des ersten Wulstbereichs, um Zeit und Aufwand zu sparen, erfolgen.

Dies kann als separate Verfahrensschritte erfolgen, so dass der bisherige Vulkanisationsprozess und die entsprechende Vulkanisationsvorrichtung unverändert bleiben können, was den Aufwand der Umsetzung reduzieren kann, indem das induktive Erhitzen des ringförmigen Metallkerns des ersten Wulstbereichs des Balgs als separater Verfahrensschritt in einer separaten Vorrichtung erfolgt.

Auch kann die Vulkanisationsvorrichtung um die Möglichkeit der induktiven Erhitzung des ringförmigen Metallkerns des ersten Wulstbereichs des Balgs ergänzt werden, um die gesamte Vulkanisation mittels einer Vorrichtung durchzuführen und so Zeit für einen Wechsel des Balgs zwischen zwei Vorrichtungen zu sparen. Auch kann der Aufwand einer separaten Vorrichtung vermieden werden. In diesem Fall kann die Erhitzung des ringförmigen Metallkerns des ersten Wulstbereichs des Balgs gleichzeitig mit der eigentlichen Vulkanisation des Balgs erfolgen, was ebenfalls Zeit sparen kann. Alternativ kann die Erhitzung des ringförmigen Metallkerns des ersten Wulstbereich des Balgs dennoch als separater Verfahrensschritt vorher oder nachher zum eigentlichen Vulkanisieren erfolgen, was die Gestaltungsmöglichkeiten des Vulkanisationsprozesses erhöhen kann.

In jedem Fall können die Vorteile des erfindungsgemäßen Verfahrens darin gesehen werden, dass ein energie- und prozesseffizienteres Heizen bzw. Vulkanisieren des Balges erreicht werden kann. Auch kann dieses Vorgehen eine konstante Prozesstemperatur bei der Vulkanisation begünstigen, wodurch Schwankungen der Temperatur im Prozess vermieden oder reduziert werden können. Es kann auch eine direkte Energieeinleitung in den Balg als Produkt erfolgen. Ferner können die Gefahren der Untervulkanisation sowie der Reversion in der Balgwülsten, d.h. dass nach Überschreiten des Vernetzungsoptimums Molekülketten wieder aufgebrochen werden, reduziert werden.

Hierdurch können konstante, reproduzierbare mechanische Eigenschaften wie Elastizitätsmodul, Zugfestigkeit etc. des vulkanisierten Balgs erreicht bzw. sichergestellt werden. Dies kann auch zu einer höheren Lebensdauer des Balgs und damit auch der Luftfedern führen, da das zu vulkanisierende Material bzw. der Gummi homogener geheizt wird.

Gemäß einem Aspekt der Erfindung erfolgen die Vulkanisation des Balgs und die induktive Erhitzung des ringförmigen Metallkerns des ersten Wulstbereichs als separate Verfahrensschritte, vorzugsweise mittels unterschiedlicher Vorrichtungen. Dies kann eine konkrete Möglichkeit der Umsetzung darstellen, wie zuvor bereits beschrieben.

Gemäß einem weiteren Aspekt der Erfindung erfolgen zuerst die Vulkanisation des Balgs und, vorzugsweise unmittelbar anschließend, die induktive Erhitzung des ringförmigen Metallkerns des ersten Wulstbereichs als separate Verfahrensschritte, vorzugsweise mittels unterschiedlicher Vorrichtungen. Dies kann eine konkrete Möglichkeit der Umsetzung darstellen, wie zuvor bereits beschrieben.

Gemäß einem weiteren Aspekt der Erfindung erfolgt die induktive Erhitzung des ringförmigen Metallkerns des ersten Wulstbereichs während der Vulkanisation des Balgs. Dies kann eine konkrete Möglichkeit der Umsetzung darstellen, wie zuvor bereits beschrieben.

Gemäß einem weiteren Aspekt der Erfindung weist der Balg ferner einen zweiten Wulstbereich auf, mit welchem der Balg an dem gegenüberliegenden Ende des Rollbereichs endet, so dass die beiden Wulstbereiche den Rollbereich zwischen sich einschließen. Dies kann eine konkrete Möglichkeit der Umsetzung darstellen, wie zuvor bereits beschrieben.

Die vorliegende Erfindung betrifft auch eine Vorrichtung zum Vulkanisieren eines Balgs einer Luftfeder, vorzugsweise gemäß eines Verfahrens wie zuvor beschrieben, wobei der Balg aufweist:
- einen Rollbereich und
- wenigstens einen ersten Wulstbereich, mit welchem der Balg an einem Ende des Rollbereichs endet,
wobei der erste Wulstbereich zumindest abschnittsweise, vorzugsweise vollständig, einen ringförmigen Metallkern aufweist, wie zuvor beschrieben.

Die Vorrichtung ist dadurch gekennzeichnet, dass die Vorrichtung ausgebildet ist, den Balg zu vulkanisieren und den ringförmigen Metallkern des ersten Wulstbereichs induktiv zu erhitzen. Hierdurch kann eine Vorrichtung geschaffen werden, um den Balg einer Luftfeder innerhalb derselben Vorrichtung zu vulkanisieren und dessen ersten Wulstbereich mittels einer induktiven Erhitzung des ringförmigen Metallkerns zusätzlich entsprechend der Vulkanisation durchzuheizen. Dies kann vorzugsweise gleichzeitig oder auch nacheinander erfolgen, wie zuvor bereits beschrieben.

Gemäß einem Aspekt der Erfindung ist die Vorrichtung ausgebildet, die Vulkanisation des Balgs und die induktive Erhitzung des ringförmigen Metallkerns des ersten Wulstbereichs als separate Verfahrensschritte durchzuführen. Dies kann eine konkrete Möglichkeit der Umsetzung darstellen, wie zuvor bereits beschrieben.

Gemäß einem weiteren Aspekt der Erfindung ist die Vorrichtung entsprechend ausgebildet, die Vulkanisation des Balgs und die induktive Erhitzung des ringförmigen Metallkerns des ersten Wulstbereichs als separate Verfahrensschritte durchzuführen. Dies kann eine konkrete Möglichkeit der Umsetzung darstellen, wie zuvor bereits beschrieben.

Die vorliegende Erfindung betrifft ferner eine Luftfeder, welche nach einem Verfahren wie zuvor beschrieben hergestellt wurde und bzw. oder welche in einer Vorrichtung wie zuvor beschrieben hergestellt wurde. Somit kann ein erfindungsgemäß hergestellter Balg bei einer Luftfeder eingesetzt werden, um die zuvor beschriebenen Eigenschaften und Vorteile dort umzusetzen und zu nutzen.

Die vorliegende Erfindung betrifft des Weiteren ein Fahrzeug, vorzugsweise ein Straßenfahrzeug oder ein Schienenfahrzeug, mit wenigstens einer Luftfeder wie zuvor beschrieben. Somit kann eine erfindungsgemäße Luftfeder bei einem Fahrzeug eingesetzt werden, um die zuvor beschriebenen Eigenschaften und Vorteile dort umzusetzen und zu nutzen.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer erfindungsgemäßen Luftfeder von schräg vorne oben, teilweise als Schnitt; und
- Fig. 2: einen Ausschnitt der Figur 1.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

Die Luftfeder 1 weist einen Kolben 11 bzw. einen Abrollkolben 11 als erstes, unteres Anschlusselement 11 auf, welcher auf einem Fahrgestell (nicht dargestellt) eines Fahrzeugs wie beispielsweise eines Schienenfahrzeugs befestigt ist. Am oberen Ende des Kolbens 11 ist radial außenseitig ein Balg 10 mit dem Kolben 11 luftdicht verbunden. An seinem oberen Ende wird der Balg 10 von einem Deckel 12 bzw. von einer Bördelplatte 12 als zweites, oberes Anschlusselement 12 luftdicht gehalten, welcher mit einer Karosserie (nicht dargestellt) des Fahrzeugs verbunden ist. Ein Innenvolumen A der Luftfeder 1 wird von dem Balg 10, dem Kolben 11 und dem Deckel 12 luftdicht eingeschlossen, wobei das Innenvolumen A der Luftfeder 1 mit Druckluft gefüllt ist, wobei die Druckluft mittels eines Ventils (nicht dargestellt) im Deckel 12 abgelassen oder aufgefüllt bzw. erhöht werden kann, um die Höhe der Luftfeder 1, d.h. den Abstand zwischen dem Deckel 12 und dem Kolben 11, zu verändern.

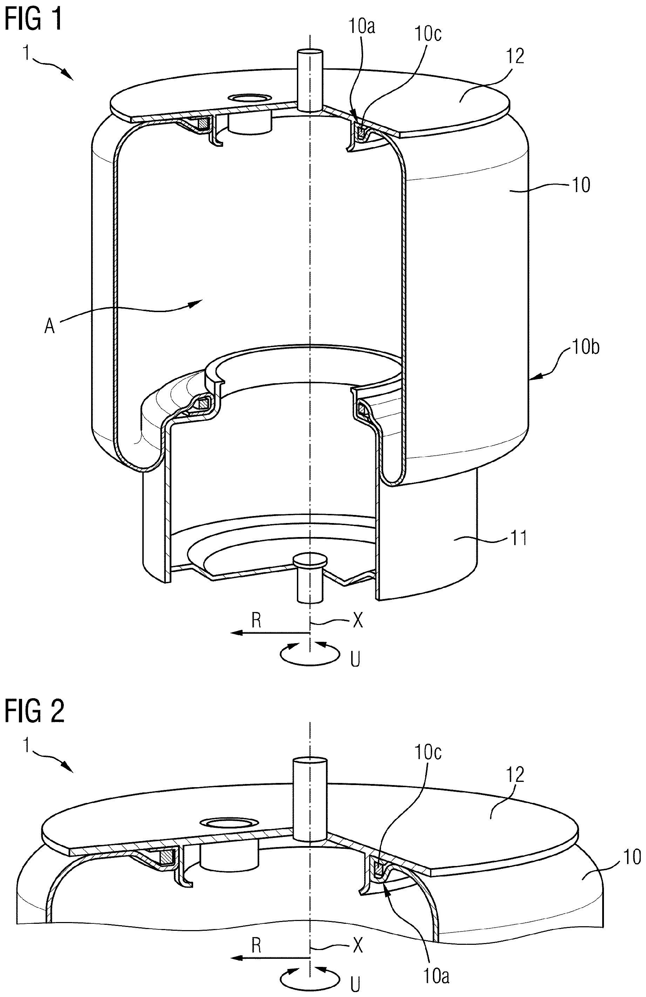

Der Balg 10 weist einen Rollbereich 10b auf, welcher auch als Balgbereich 10b bezeichnet werden kann und welcher sich entlang der Längsachse X zylindrisch erstreckt sowie den wesentlichen Teil des Balgs 10 ausmacht, vgl. Figur 1.

An beiden Enden entlang der Längsachse X schließt der Balgs 10 mit jeweils einem Wulstbereich 10a ab, welche auch als Kernbereiche 10a bezeichnet werden können. Der Rollbereich 10b erstreckt sich somit zwischen den beiden Wulstbereichen 10a.

Jeder Wulstbereich 10a weist einen ringförmigen geschlossene Metallkörper 10c auf, welcher vollständig vom elastomeren Material des Balgs 10 umschlossen wird. Dabei ist der Bereich des Balgs 10 um die beiden ringförmigen Metallkörper 10c herum als Wulstbereich 10a vergleichsweise dick gegenüber dem Rollbereich 10b ausgebildet, um jeweils den ringförmigen Metallkörper 10c umschließen bzw. in sich einbetten zu können.

Aufgrund dieser vergleichsweise großen Dicke des elastomeren Materials der beiden Wulstbereiche 10a kann es zu einer unvollständigen Vulkanisation der Wulstbereiche 10a des Balgs 10 kommen, da die Vulkanisation nicht so lange erfolgen kann, dass die Gefahr einer Reversion im Rollbereich 10b besteht, d.h. dass nach einem Überschreiten des Vernetzungsoptimums die Molekülketten des elastomeren Materials im Rollbereich 10b wieder aufgebrochen werden. Dies kann jedoch zu einer unvollständigen Vulkanisation des vergleichsweise dicken zu vulkanisierenden Materials der Wulstbereiche 10a des Balgs 10 führen.

Erfindungsgemäß werden daher die beiden ringförmigen Metallkörper 10c der Wulstbereiche 10a des Balgs 10 während des Vulkanisationsprozesses induktiv erhitzt, so dass die von den ringförmigen Metallkörpern 10c ausgehende Hitze das die ringförmigen Metallkörper 10c umgebende zu vulkanisierende Material erhitzen und hierdurch die Vulkanisation unterstützen kann. Dies kann den Grad der Vulkanisation der Wulstbereiche 10a des Balgs 10 erhöhen bzw. die gewünschte vollständige Vulkanisation der Wulstbereiche 10a des Balgs 10 ermöglichen.

### Bezugszeichenliste (Teil der Beschreibung)

- R: radiale Richtung
- U: Umfangsrichtung
- X: Längsachse

- A: Innenvolumen

- 1: Luftfeder
- 10: Balg
- 10a: Wulstbereich; Kernbereich
- 10b: Rollbereich; Balgbereich
- 10c: ringförmiger Metallkern des Wulstbereichs 10a
- 11: erstes, unteres Anschlusselement; Kolben bzw. Abrollkolben
- 12: zweites, oberes Anschlusselement; Deckel bzw. Bördelplatte

## Patentansprüche

1. Verfahren zum Vulkanisieren eines Balgs (10) einer Luftfeder (1),
wobei der Balg (10) aufweist:
• einen Rollbereich (10b) und
• wenigstens einen ersten Wulstbereich (10a), mit welchem der Balg (10) an einem Ende des Rollbereichs (10b) endet,
wobei der erste Wulstbereich (10a) zumindest abschnittsweise, vorzugsweise vollständig, einen ringförmigen Metallkern (10c) aufweist,
**dadurch gekennzeichnet, dass**
zusätzlich zur Vulkanisation des Balgs (10) eine induktive Erhitzung des ringförmigen Metallkerns (10c) des ersten Wulstbereichs (10a) erfolgt.

2. Verfahren nach Anspruch 1,
wobei die Vulkanisation des Balgs (10) und die induktive Erhitzung des ringförmigen Metallkerns (10c) des ersten Wulstbereichs (10a) als separate Verfahrensschritte, vorzugsweise mittels unterschiedlicher Vorrichtungen, erfolgen.

3. Verfahren nach Anspruch 2,
wobei zuerst die Vulkanisation des Balgs (10) und, vorzugsweise unmittelbar, anschließend die induktive Erhitzung des ringförmigen Metallkerns (10c) des ersten Wulstbereichs (10a) als separate Verfahrensschritte, vorzugsweise mittels unterschiedlicher Vorrichtungen, erfolgen.

4. Verfahren nach Anspruch 1,
wobei die induktive Erhitzung des ringförmigen Metallkerns (10c) des ersten Wulstbereichs (10a) während der Vulkanisation des Balgs (10) erfolgt.

5. Verfahren nach einem der vorangehenden Ansprüche,
wobei der Balg (10) ferner einen zweiten Wulstbereich (10a) aufweist, mit welchem der Balg (10) an dem gegenüberliegenden Ende des Rollbereichs (10b) endet, so dass die beiden Wulstbereiche (10a) den Rollbereich (10b) zwischen sich einschließen.

6. Vorrichtung zum Vulkanisieren eines Balgs (10) einer Luftfeder (1), vorzugsweise gemäß eines Verfahrens nach einem der vorangehenden Ansprüche,
wobei der Balg (10) aufweist:
• einen Rollbereich (10b) und
• wenigstens einen ersten Wulstbereich (10a), mit welchem der Balg (10) an einem Ende des Rollbereichs (10b) endet,
wobei der erste Wulstbereich (10a) zumindest abschnittsweise, vorzugsweise vollständig, einen ringförmigen Metallkern (10c) aufweist,
**dadurch gekennzeichnet, dass**
die Vorrichtung ausgebildet ist, den Balg (10) zu vulkanisieren und den ringförmigen Metallkern (10c) des ersten Wulstbereichs (10a) induktiv zu erhitzen.

7. Vorrichtung nach Anspruch 6,
welche ausgebildet ist, die Vulkanisation des Balgs (10) und die induktive Erhitzung des ringförmigen Metallkerns (10c) des ersten Wulstbereichs (10a) als separate Verfahrensschritte durchzuführen.

8. Vorrichtung nach Anspruch 6,
welche ausgebildet ist, die Vulkanisation des Balgs (10) und die induktive Erhitzung des ringförmigen Metallkerns (10c) des ersten Wulstbereichs (10a) als separate Verfahrensschritte durchzuführen.

9. Luftfeder (1),
welche nach einem Verfahren nach einem der Ansprüche 1 bis 5 hergestellt wurde und/oder
welche in einer Vorrichtung nach einem der Ansprüche 6 bis 8 hergestellt wurde.

10. Fahrzeug, vorzugsweise Straßenfahrzeug oder Schienenfahrzeug,
mit wenigstens einer Luftfeder (1) nach Anspruch 9.
